# EUROPÄISCHE PATENTANMELDUNG

(11) **EP 3 957 760 A1**
(43) Veröffentlichungstag der Anmeldung: **23.02.2022**
(21) Anmeldenummer: 21186159.6
(22) Anmeldetag: 16.07.2021
(51) Int. Cl.: C22B 7/00, C22B 3/10, C22B 11/02, C22B 11/00

(54) **VERFAHREN ZUR GEWINNUNG VON MINDESTENS EINEM EDELMETALL**

(30) Priorität: 05.08.2020 DE 102020209880
(71) Anmelder: Robert Bosch GmbH, 70442 Stuttgart (DE)
(72) Erfinder: Baldizzone, Claudio, 70174 Stuttgart (DE)

(57) **Zusammenfassung**

Die Erfindung betrifft ein Verfahren zur Gewinnung von mindestens einem Edelmetall aus der Gruppe, welche aus Iridium, Gold, Ruthenium, Palladium, Platin und Silber besteht, aus einem Verbund, welcher das Edelmetall auf einem keramischen Träger aufweist. Dabei erfolgt ein Einbringen (11) des Verbunds in eine erste wässrige Lösung, welche 0,1 mol/l bis 5,0 mol/l mindestens einer Mineralsäure enthält, ein Einleiten (12) mindestens eines gasförmigen ersten Oxidationsmittels in die Lösung, ein Abtrennen (13) des keramischen Trägers aus der Lösung, und eine reduktive Gewinnung (14) des mindestens einen Edelmetalls aus der Lösung.

## Beschreibung

Die vorliegende Erfindung betrifft ein Verfahren zur Gewinnung von mindestens einem der Edelmetalle Iridium, Gold, Ruthenium, Palladium, Platin und Silber.

### Stand der Technik

Die Edelmetalle Iridium, Gold, Ruthenium, Palladium, Platin und Silber werden in Verbundmaterialien häufig auf keramische Träger aufgebracht. Solche Verbundmaterialien finden beispielsweise als Katalysatoren Verwendung, insbesondere als Abgaskatalysatoren für Kraftfahrzeuge. Auch piezoelektrische Aktuatoren sind oftmals als Verbünde aus diesen Edelmetallen mit einem keramischen Träger ausgebildet.

Da es sich bei diesen Edelmetallen um essenzielle Rohstoffe handelt, ist ihre Rückgewinnung aus alten Verbünden wünschenswert. Auch eine Wiederverwendung des keramischen Trägers ist in einigen Fällen wünschenswert. Eine hydrometallurgische Rückgewinnung der Edelmetalle unter Verwendung konzentrierter starker Säuren und starker Oxidationsmittel führt allerdings dazu, dass nicht nur die Edelmetalle, sondern auch metallische Komponenten des keramischen Trägers in Lösung gebracht werden. Die Edelmetalle müssen dann selektiv von den unterwünschten Metallen aus der Lösung abgetrennt werden. Die in der Lösung zurückbleibenden, metallischen Komponenten der Keramik, bei denen es sich beispielsweise um giftige Schwermetalle wie Blei handeln kann, haben allerdings zur Folge, dass nach der Rückgewinnung der Edelmetalle auch noch eine schwierige und teure Aufbereitung der Lösung erfolgen muss, die nicht unbehandelt ins Abwasser gelangen darf. Zudem zerstört das Herauslösen von metallischen Bestandteilen des keramischen Trägers diesen, sodass er nicht wiederverwendet werden kann.

### Offenbarung der Erfindung

Das Verfahren zur Gewinnung von mindestens einem Edelmetall aus der Gruppe, welche aus Iridium, Gold, Ruthenium, Palladium, Platin und Silber besteht aus einem Verbund, welcher das Edelmetall auf einem keramischen Träger aufweist, umfasst die folgenden Schritte:
a) Einbringen des Verbunds in eine erste wässrige Lösung, welche 0,1 mol/l bis 5,0 mol/l mindestens einer Mineralsäure enthält;
b) Einleiten mindestens eines gasförmigen ersten Oxidationsmittels in die Lösung;
c) Abtrennen des keramischen Trägers aus der Lösung; und
d) Reduktive Gewinnung des mindestens einen Edelmetalls aus der Lösung.

Geeignete Mineralsäuren beziehungsweise anorganische Säuren zur Verwendung im Schritt a sind insbesondere ausgewählt aus der Gruppe, die aus Salzsäure, Schwefelsäure, Perchlorsäure und Salpetersäure besteht.

Das gasförmige erste Oxidationsmittel bringt das Edelmetall in Schritt b oxidativ in Lösung. Die Redox-Spannung des Oxidationsmittels kann dabei gemäß der Nernst'schen Gleichung über die Konzentration der Mineralsäure so eingestellt werden, dass eine Oxidation des Edelmetalls erfolgt, während Metallkomponenten des keramischen Trägers nicht oxidiert werden.

Durch das Abtrennen des keramischen Trägers aus der Lösung wird dieser zurückgewonnen und die Lösung steht für die reduktive Gewinnung des Edelmetalls im Schritt d zur Verfügung. Das Abtrennen kann insbesondere durch Abfiltrieren erfolgen.

Ein einfacher Weg zur reduktiven Gewinnung des Edelmetalls aus der Lösung besteht darin, ein gasförmiges Reduktionsmittel in die Lösung einzuleiten. Geeignete gasförmige Reduktionsmittel sind insbesondere Wasserstoff, Kohlenmonoxid, Schwefeldioxid und Gemische daraus.

In einer ersten Ausführungsform des Verfahrens, die insbesondere dazu geeignet ist ein einziges Edelmetall zu gewinnen, ist es bevorzugt, dass die wässrige Lösung 0,1 mol/l bis 5,0 mol/l Halogenidionen enthält, die ausgewählt sind aus der Gruppe bestehend aus Chloridionen, Bromidionen und Iodidionen. Die Halogenidionen können von der Mineralsäure bereitgestellt werden, insbesondere wenn es sich hierbei um Salzsäure handelt oder sie können der Lösung in Form eines Salzes insbesondere eines Alkalihalogenids hinzugefügt werden. Es ist auch möglich, dass der Lösung durch die Mineralsäure eine erste Halogenidionenkonzentration zur Verfügung gestellt wird, die anschließend durch Hinzufügen eines Salzes auf eine zweite Halogenidionenkonzentration erhöht wird. Die Halogenidionen können als Komplexbildner fungieren und durch die Oxidation erzeugte Edelmetallkationen als Komplexanionen in Lösung halten.

Das erste Oxidationsmittel enthält in der ersten Ausführungsform des Verfahrens vorzugsweise Ozon. Besonders bevorzugt handelt es sich bei dem ersten Oxidationsmittel um ein Sauerstoff/Ozon-Gemisch, welches 0,5 Vol.-% bis 4,0 Vol.-% Ozon enthält. Ein solches Sauerstoff/Ozon-Gemisch kann insbesondere von einem Ozonisator bereitgestellt werden. Es ist gut dazu geeignet, um auch Edelmetalle mit einer hohen Redox-Spannung oxidativ in Lösung zu bringen, ohne dabei in keramischen Trägern üblicherweise enthaltene Schwermetalle wie beispielsweise Blei in wesentlicher Menge zu oxidieren.

In einer zweiten Ausführungsform des Verfahrens umfasst dieses weiterhin die folgenden Schritte:
e) Einbringen des abfiltrierten keramischen Trägers in eine wässrige Lösung, welche 0,1 mol/l bis 5,0 mol/l mindestens einer Mineralsäure enthält;
f) Einleiten mindestens eines gasförmigen zweiten Oxidationsmittels in die Lösung;
g) Abtrennen des keramischen Trägers aus der Lösung; und
h) Reduktive Gewinnung des mindestens einen Edelmetalls aus der Lösung.

Die zweite Ausführungsform des Verfahrens ist insbesondere dazu geeignet zwei unterschiedliche Edelmetalle, die in dem Verbund enthalten sind im Verfahren voneinander zu trennen. Beispielsweise kann auf diese Weise Silber als erstes Edelmetall von Palladium als zweitem Edelmetall getrennt werden.

Um diese Trennung zu realisieren, ist es bevorzugt, dass das erste Oxidationsmittel gegenüber einem zu gewinnenden ersten Edelmetall eine größere Redox-Spannung aufweist als gegenüber einem zu gewinnenden zweiten Edelmetall. Die Redox-Spannung kann gemäß der Norm DIN 38404-6 ermittelt werden. Dabei erfolgt der Vergleich der Redox-Spannungen nicht unter Standardbedingungen, sondern bei dem Druck, bei der Temperatur und bei dem pH-Wert, die für das erste Oxidationsmittel im Schritt b und für das zweite Oxidationsmittel im Schritt f herrschen. Durch diese Differenz der Redox-Spannungen kann ein erstes Edelmetall im Schritt b oxidativ aus dem Verbund herausgelöst werden und im Schritt d reduktiv gewonnen werden und ein zweites Edelmetall, das edler als das erste Edelmetall ist, kann im Schritt f oxidativ in Lösung gebracht werden und im Schritt h reduktiv gewonnen werden. Dabei sind für die Durchführung des Schritts h dieselben gasförmigen Reduktionsmittel besonders geeignet, die auch im Schritt d verwendet werden können.

Die zweite Ausführungsform des Verfahrens kann insbesondere dadurch realisiert werden, dass das erste Oxidationsmittel Sauerstoff ist und das zweite Oxidationsmittel Ozon enthält. Dabei ist das zweite Oxidationsmittel bevorzugt ein Sauerstoff/Ozon-Gemisch, welches 0,5 Vol.-% bis 4,0 Vol.-% Ozon enthält. Diese beiden Oxidationsmittel sind geeignet, um Edelmetalle aus dem Verbund herauszulösen, ohne zugleich eine Auflösung von Schwermetallen aus dem keramischen Träger zu bewirken.

In der zweiten Ausführungsform des Verfahrens ist es nicht erforderlich, dass die erste wässrige Lösung Halogenidionen enthält. Die zweite wässrige Lösung hingegen enthält vorzugsweise 0,1 mol/l bis 5,0 mol/l Halogenidionen, die aus der Gruppe ausgewählt sind, die aus Chloridionen, Bromidionen und lodidionen besteht. Dies Halogenidionenkonzentration kann in derselben Weise erzeugt werden, wie die Halogenidionenkonzentration der ersten wässrigen Lösung in der ersten Ausführungsform des Verfahrens. Der Zugabe von Halogenidionen in die zweite wässrige Lösung nicht aber in die erste wässrige Lösung liegt die Erkenntnis zugrunde, dass in einer Gruppe von zwei Edelmetallen das weniger edle erste Edelmetall in Lösung nicht durch Komplexbildung stabilisiert werden muss, während eine Stabilisierung des edleren zweiten Edelmetalls vorteilhaft ist.

### Kurze Beschreibung der Zeichnungen

Ausführungsbeispiele der Erfindung sind in den Zeichnungen dargestellt und werden in der nachfolgenden Beschreibung näher erläutert.
Figur 1 zeigt ein Ablaufdiagramm eines Ausführungsbeispiels des erfindungsgemäßen Verfahrens.
Figur 2 zeigt schematisch einen Verfahrensschritt eines Ausführungsbeispiels des erfindungsgemäßen Verfahrens.
Figur 3 zeigt schematisch einen anderen Verfahrensschritt eines Ausführungsbeispiels des erfindungsgemäßen Verfahrens.
Figur 4 zeigt ein Ablaufdiagramm eines anderen Ausführungsbeispiels des erfindungsgemäßen Verfahrens.
Figur 5 zeigt schematisch einen Verfahrensschritt des Ausführungsbeispiels des erfindungsgemäßen Verfahrens gemäß Figur 4.
Figur 6 zeigt schematisch einen anderen Verfahrensschritt des Ausführungsbeispiels des erfindungsgemäßen Verfahrens gemäß Figur 4.
Figur 7 zeigt schematisch noch einen anderen Verfahrensschritt des erfindungsgemäßen Verfahrens gemäß Figur 4.
Figur 8 zeigt schematisch noch einen anderen Verfahrensschritt des Ausführungsbeispiels des erfindungsgemäßen Verfahrens gemäß Figur 4.

### Ausführungsbeispiele der Erfindung

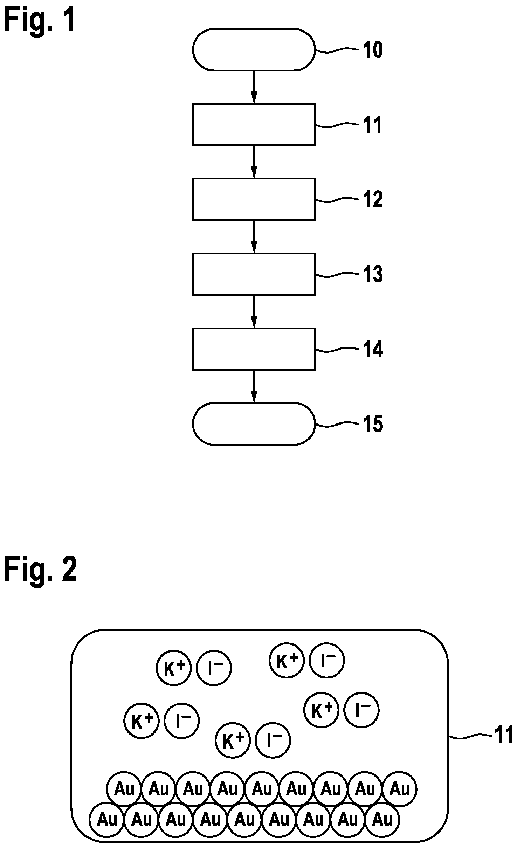

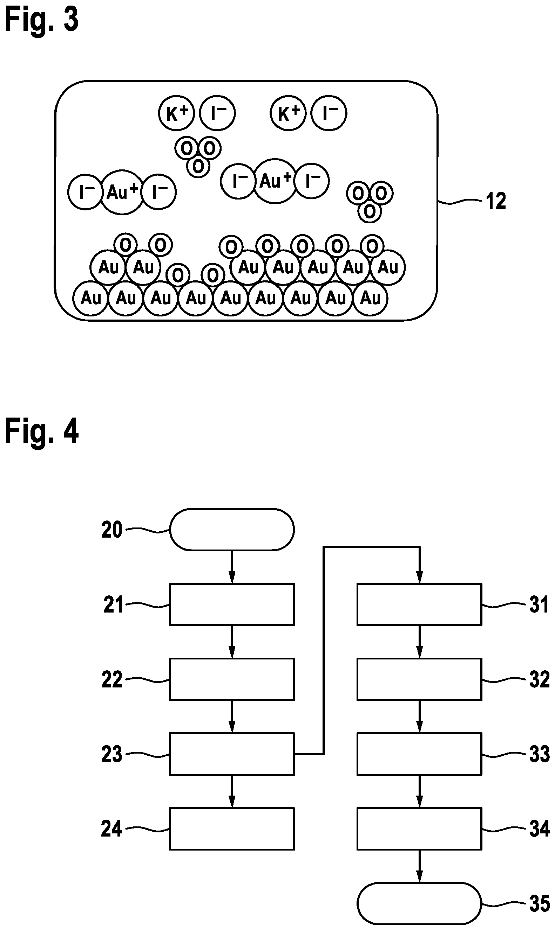

In einem ersten Ausführungsbeispiel der Erfindung weist ein keramischer Träger aus Bleizirkoniumtitanat (PZT), welches 60 Gew.-% Blei enthält, eine Beschichtung aus dem Edelmetall Gold auf, mit dem er einen Verbund bildet. Die Gewinnung des Goldes aus dem Verbund ist in Figur 1 dargestellt. Nach dem Start 10 des Verfahrens wird in einem ersten Verfahrensschritt 11 eine wässrige Lösung bereitgestellt, die 0,5 mol/l Schwefelsäure und 0,5 mol/l Kaliumiodid enthält. In diese wird der Verbund eingebracht. Dies ist in Figur 2 dargestellt, wobei lediglich der Goldbestandteil des Verbundes und nicht der keramische Träger abgebildet ist. Anschließend wird ein von einem Ozonisator erzeugtes Sauerstoff/Ozon-Gemisch, welches 2,0 Vol.-% Ozon enthält, in einem zweiten Verfahrensschritt 12 in die wässrige Lösung eingeleitet. Wie in Figur 3 dargestellt ist, wird das Gold dabei zu Gold(I)-Kationen oxidiert, die in Form von Diiodoaurat(I)-Komplexen in Lösung gehen. Nach vollständiger Auflösung des Goldes wird der unbeschädigte keramische Träger im nächsten Verfahrensschritt 13 abfiltriert. Im darauffolgenden Verfahrensschritt 14 wird metallisches Gold aus der wässrigen Lösung zurückgewonnen, indem Wasserstoff als gasförmiges Reduktionsmittel in diese eingeleitet wird. Danach erfolgt ein Beenden 15 des Verfahrens.

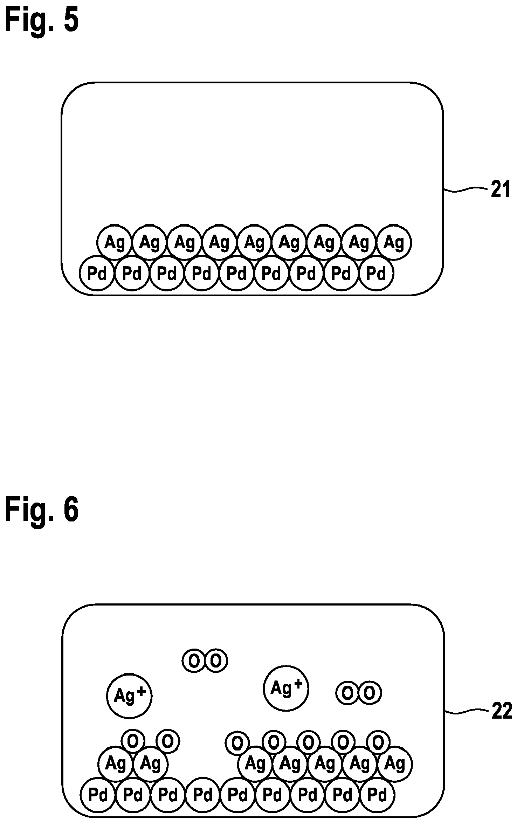

In einem zweiten Ausführungsbeispiel des Verfahrens weist ein Verbund, der denselben keramischen Träger wie im ersten Ausführungsbeispiel aufweist, eine Schicht aus dem Edelmetall Palladium und eine weitere Schicht aus dem darauf angeordneten Edelmetall Silber auf. Die Rückgewinnung und Trennung dieser Edelmetalle sind in Figur 4 dargestellt. Nach dem Start 20 des Verfahrens wird zunächst eine wässrige Lösung bereitgestellt, die 1,0 mol/l Salpetersäure enthält und der Verbund wird in diese eingebracht 21. Dies ist in Figur 5 dargestellt. Anschließend erfolgt ein Einleiten 22 von Sauerstoff in die wässrige Lösung. Dabei wird das metallische Silber zu Silber(I)-Kationen oxidiert, die in Lösung gehen. Eine Oxidation des Palladiums findet nicht statt. Nachdem das gesamte Silber oxidiert wurde, erfolgt im nächsten Schritt 23 des Verfahrens ein erstes Abfiltrieren des keramischen Trägers aus der wässrigen Lösung. Dieser trägt noch immer die Palladiumschicht. Die so erhaltende erste wässrige Lösung, die Silber(I)-Kationen enthält, kann in einem weiteren Verfahrensschritt 24 durch Einleiten von Wasserstoff reduktiv behandelt werden, um aus ihr metallisches Silber zu gewinnen.

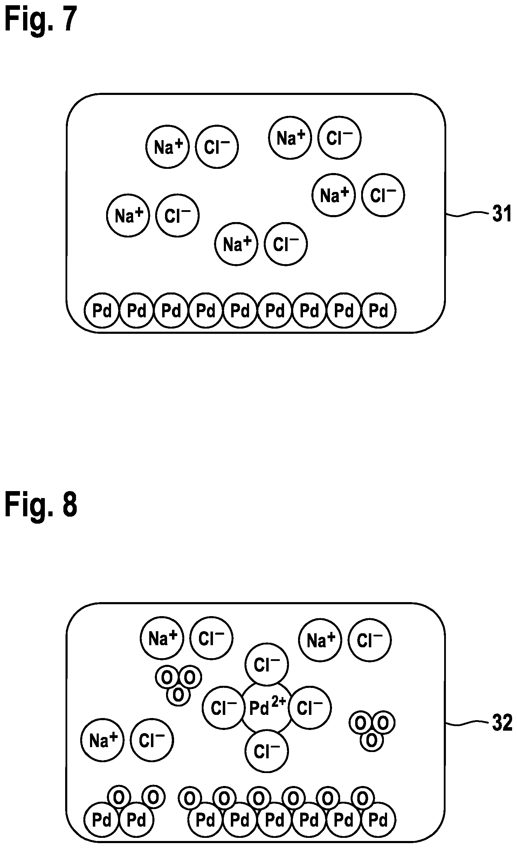

Anschließend wird eine zweite wässrige Lösung bereitgestellt, die 1,0 mol/l Perchlorsäure und 1,0 mol/l Natriumchlorid enthält. Der von seiner Silberschicht befreite Verbund wird in diese zweite wässrige Lösung eingebracht. Dies ist in Figur 7 dargestellt. Anschließend erfolgt ein Einleiten 32 eines Sauerstoff/Ozon-Gemisches, welches 0,2 Vol.-% Ozon enthält, in die wässrige Lösung. Wie in Figur 8 dargestellt ist, wird das metallische Palladium dabei zu Palladium(II)-Kationen oxidiert, die in Lösung Tetrachloropalladat(II)-Anionen bilden. Nach Auflösung des gesamten Palladiums erfolgt ein erneutes Abfiltrieren 33 des keramischen Trägers, der nun von allen Edelmetallen befreit wurde. Dieser kann nun gereinigt und anschließend mit neuen Edelmetallschichten versehen werden. Die zweite wässrige Lösung wird in einem letzten Verfahrensschritt 34 mit Wasserstoff behandelt, um aus den Tetrachloropalladat(II) reduktiv metallisches Palladium zurückzugewinnen. Anschließend wird das Verfahren beendet 35.

Es wurde festgestellt, dass in dem zweiten Ausführungsbeispiel des Verfahrens jeweils mehr als 90 Gew.-% des im Verbund enthaltenden Silbers und mehr als 90 Gew.-% des im Verbund enthaltenden Palladiums zurückgewonnen werden konnten. In der ersten wässrigen Lösung und in der zweiten wässrigen Lösung hat sich dabei weniger als 1 Gew.-% des im keramischen Träger enthaltenden Bleis aufgelöst.

## Patentansprüche

1. Verfahren zur Gewinnung von mindestens einem Edelmetall aus der Gruppe, welche aus Iridium, Gold, Ruthenium, Palladium, Platin und Silber besteht, aus einem Verbund, welcher das Edelmetall auf einem keramischen Träger aufweist, umfassend die folgenden Schritte:
a) Einbringen (11, 21) des Verbunds in eine erste wässrige Lösung, welche 0,1 mol/l bis 5,0 mol/l mindestens einer Mineralsäure enthält;
b) Einleiten (12, 22) mindestens eines gasförmigen ersten Oxidationsmittels in die Lösung;
c) Abtrennen (13, 23) des keramischen Trägers aus der Lösung; und
d) Reduktive Gewinnung (14, 24) des mindestens einen Edelmetalls aus der Lösung.

2. Verfahren nach Anspruch 1, **dadurch gekennzeichnet, dass** die erste wässrige Lösung 0,1 mol/l bis 5,0 mol/l Halogenidionen enthält, die ausgewählt sind aus der Gruppe, bestehend aus Chloridionen, Bromidionen und Iodidionen.

3. Verfahren nach Anspruch 1 oder 2, **dadurch gekennzeichnet, dass** das erste Oxidationsmittel Ozon enthält.

4. Verfahren nach Anspruch 3, **dadurch gekennzeichnet, dass** das erste Oxidationsmittel ein Sauerstoff/Ozon-Gemisch ist, welches 0,5 Vol.-% bis 4,0 Vol.-% Ozon enthält.

5. Verfahren nach Anspruch 1, weiterhin umfassend die folgenden Schritte:
e) Einbringen (31) des abfiltrierten keramischen Trägers in eine wässrige Lösung, welche 0,1 mol/l bis 5,0 mol/l mindestens einer Mineralsäure enthält;
f) Einleiten (32) mindestens eines gasförmigen zweiten Oxidationsmittels in die Lösung;
g) Abtrennen (33) des keramischen Trägers aus der Lösung; und
h) Reduktive (34) Gewinnung des mindestens einen Edelmetalls aus der Lösung.

6. Verfahren nach Anspruch 5, **dadurch gekennzeichnet, dass** die zweite wässrige Lösung 0,1 mol/l bis 5,0 mol/l Halogenidionen enthält, die ausgewählt sind aus der Gruppe, bestehend aus Chloridionen, Bromidionen und Iodidionen.

7. Verfahren nach Anspruch 5 oder 6, **dadurch gekennzeichnet, dass** das zweite Oxidationsmittel gegenüber einem zu gewinnenden ersten Edelmetall eine größere Redox-Spannung aufweist, als gegenüber einem zu gewinnenden zweiten Edelmetall.

8. Verfahren nach Anspruch 7, **dadurch gekennzeichnet, dass** das erste Oxidationsmittel Sauerstoff ist und das zweite Oxidationsmittel Ozon enthält.

9. Verfahren nach Anspruch 8, **dadurch gekennzeichnet, dass** das erste Oxidationsmittel ein Sauerstoff/Ozon-Gemisch ist, welches 0,5 Vol.-% bis 4,0 Vol.-% Ozon enthält.

10. Verfahren nach einem der Ansprüche 7 bis 9, **dadurch gekennzeichnet, dass** das erste Edelmetall Silber ist und das zweite Edelmetall Palladium ist.
